# EUROPEAN PATENT APPLICATION

(11) **EP 1 335 548 A1**
(43) Date of publication of application: **13.08.2003**
(21) Application number: 02250960.8
(22) Date of filing: 12.02.2002
(51) Int. Cl.: H04L 27/18

(54) **Gaussian FSK multiresolution system employing unequal error protection**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

A modulation system modulates each channel of a multiplex (31,32,...3N) using a number of modulation levels, weights each channel by a different amount (131) and combines the resulting weighted values into an output (40) having sufficient modulation levels to distinguish the individual signals. The weightings given to each input can be selected according to the priority given to that input, such that the highest priority inputs can still be discriminated in conditions with a low signal/noise ratio.

## Description

This invention relates to the transmission of data over high data-rate point-to-point and point-to-multipoint radio links, where the major limitations on capacity are available bandwidth and power, coupled with tight constraints on emissions outside the occupied bandwidth. It may be used between any radio transmitter and receiver, whether fixed or mobile, terrestrial or in orbit.

There are several methods for increasing the information content of transmissions. These include the use of ever-greater bandwidth, as it becomes technically feasible by making use of higher carrier frequencies. However, carrier frequencies are a scarce resource, and operators are not usually free to select a frequency of their choice. Higher frequencies also tend to be subject to greater attenuation and require greater power to generate and amplify.

Some systems, when required to transmit a signal requiring a higher data rate than a single channel can provide, are arranged to make use of two or more channels, each carrying part of the data. The receiving system then reassembles the complete signal. However, by using more complex modulation systems a more efficient use of bandwidth can be achieved, as will now be explained.

Digital amplitude modulation systems may operate in a binary "on/off" (1/0) mode but, to avoid loss of synchronisation with the carrier, two non-zero amplitudes are more usually used. If these are positive and negative values (of the same or different magnitudes) they may be also considered as a phase shift: a "1" being indicated by a 180° shift in the phase of the carrier signal compared to the phase of a zero.

Instead of amplitude or phase, the different symbols may be represented by different frequencies. This is known as frequency shift keying (FSK). In order to economise on bandwidth, the frequency shifts are generally selected to be the minimum necessary to be distinguishable from each other, (minimum shift keying or MSK). To avoid high frequency spectral spread, the frequency shifts are generally shaped such that the frequency shifts follow a smooth Gaussian waveform rather than a square wave shape: thus the system is known as Gaussian minimum shift keying (GMSK).

Instead of a binary system (just two modulation states: 1 and 0) a larger number of modulation states may be used, by the use of more than one amplitude level or frequency, or by more closely spaced phase shifts, or by use of a combination of frequencies, amplitudes and phase shifts in the same system. This allows several binary digits ("bits") to be transmitted together, for example a system using sixteen different phase/amplitude states would allow each individual symbol to represent a four-bit word. The number of modulation states required increases exponentially with the number of binary digits to be represented by each symbol. However, this increase in speed requires either a greater carrier to noise ratio than a simple binary system in order to allow the different levels to be clearly distinguishable, or a greater bandwidth in order to maintain the same minimum shift between phase/amplitude states.

It will be noted that if there are more than two levels, frequency, phase or amplitude shifts greater than the minimum discernible will occur. For example, in an optimal sixteen-level system the minimum shift is one-sixteenth the maximum bandwidth required.

International Patent Specification PCT/GB01/03697 filed on 17^{th} August 2001 discloses a system in which data is transmitted in a plurality of channels (data streams) each having a multiple level modulation system. By selecting the number of levels and the number of channels appropriately, a greater data rate can be achieved for a given bandwidth than by using either system on its own.

According to one aspect of the present invention there is provided a method of transmitting a signal using three or more modulation levels, in which two or more data streams are each modulated using a lesser number of modulation levels and combined to generate the transmitted signal

For most practical embodiments the number of modulation levels processed in the receiver should equal the total number of levels in the data streams. However, if some information loss can be tolerated on one or more of the data streams a smaller number of modulation levels can be decoded.

The plurality of modulation levels may be obtained by weighting each data stream by a different value, and adding the resulting weighted data streams together. For all values to be distinguishable, the weightings should be selected such that the sums of the weighted values identify a unique value for each data stream. Although the scope of the invention extends to other arrangements, the most effective use of bandwidth is achieved if the data streams are weighted with respect to each other by different integer powers of the number of modulation levels in each data stream. (For the purposes of this specification, the integer powers of a number P include P° = 1, P itself, and negative powers). Thus, if the data streams are binary, each stream is weighted by a different integer power of 2, e.g. 1,2,4,8,..... In a ternary system (e.g. -1, 0, 1), the streams would have the weightings, 1, 3, 9, 27,..... Therefore one or more of the modulation levels in the transmitted signal have a greater modulation shift than one or more others. Preferably, the data streams have differing priority status and are allocated to each level such that the highest priority streams are allocated to the levels with the greatest variation in modulation shift, (which are therefore the most robust).

According to another aspect there is provided a method for processing signals received from a transmitter, the method comprising receiving a signal generated as defined above, and separating the signal into a plurality of individual data streams each having a lesser number of modulation levels than the incoming signal.

According to other aspects there are provided respectively a transmitter and a receiver having means for performing these methods. Where a two-way connection is required, such a transmitter and receiver may be combined into a single transceiver, to co-operate with a similar transceiver at the remote end of the two-way link

The individual signals may be independently generated, different priorities being allocated to them according to a predetermined criterion such as the identity of the termination points from or to which they are being transmitted. This allows users paying for a premium service, or data overhead essential to the integrity of the network, to be given the most robust channels. Another possibility is to allow one stream to use two channels, with some degree of error checking, whilst another similar stream may use a single more robust channel, allowing it to dispense with that overhead.

In another use of the invention, a single high bit-rate signal may be divided into two or more data streams, allocated different priorities. For example, text or sound may be allocated a higher priority than video information, and error correction data may be allocated a lower priority than the data it is to correct. The data is then coded using a subset of a multi-bit "word". For example, sound may be allocated one bit, video another two bits, and error correction a fourth bit. These four bits are then assembled into a four-bit "word", such that the highest priority symbol (the sound) is allocated the first digit, and so on. The four bit word is then coded as a single symbol in a 16-level coding scheme, selected such that the levels are allocated in order such that the first digit determines whether the symbol is in the upper eight levels or the lower eight levels, the second digit determines whether the symbol is in the upper or lower four levels of the selected eight, and so on. This allows the first digit, which carries the highest priority data, to be represented by the greatest modulation shift, thus making it more robust than the lower priority information represented by smaller shifts. The system may be thought of as applying a low shift modulation to the high shift signals - the high priority information is represented by a binary signal having a large (average) shift, but whose levels are modulated by the lower priority information, which has a smaller shift. This system allows the achievement of "graceful" failure in the presence of noise. "Graceful" failure means a gradual, rather than catastrophic, deterioration of service, allowing the system to shut down in an orderly manner or take other remedial action, such as omission of the secondary information. Alternatively, the provision of different Quality-of-Service data may be made available on each of the streams, because the streams running on the more robust levels need less error correction and thus less overhead overall, allowing variation in the balance between bit-rate and quality of service.

The invention may combine the use of Filtered Frequency Shift Keying with multiple levels and multiple data streams. One or more streams may have forward-error correction and scrambling.

The different levels may use any coding system, such as simple binary or Gray coding. Essentially, the plurality of inputs are combined to produce an anlaguue value (the multi-level character) from which the state of each individual input can be uniquely identified, two or more of the inputs having different modulation indices for the analogue value.

The use of multiple streams, each carrying a different modulation index, provides for graceful link degradation. Quality of service often varies between channels, for a number of reasons. By using multiple streams, the overall quality of service on any given transmission will be the average of several streams, and therefore less likely to be below an acceptable level than if each used a single channel. It also allows the use of baseband filtering to allow the occupied bandwidth to be controlled directly. In a preferred arrangement a Gaussian filter is used to ensure little inter-symbol interference and low out-of-band emissions. A further advantage is that the transmitted signal has a constant envelope and hence can be transmitted through non-linear channel amplifiers without sideband spectral re-growth.

In conditions of high noise or by design, the receiver could be arranged to resolve only selected streams. In particular the invention lends itself to a point-to-multipoint transmission system. Transmissions having the largest modulation shifts can be allocated to those receivers which, because of their small size or distance from the transmitter, have less sensitivity than other receivers. More sensitive receivers could detect all the data streams, but disregard those not intended for them.

The use of the invention allows terminal and repeater amplifiers to run in non-linear (class C) or saturated mode. The use of multiple levels allows more bits to be transmitted in a given bandwidth. This allows greater data rates to be transmitted in limited bandwidth links, by using a multiple symbol alphabet.

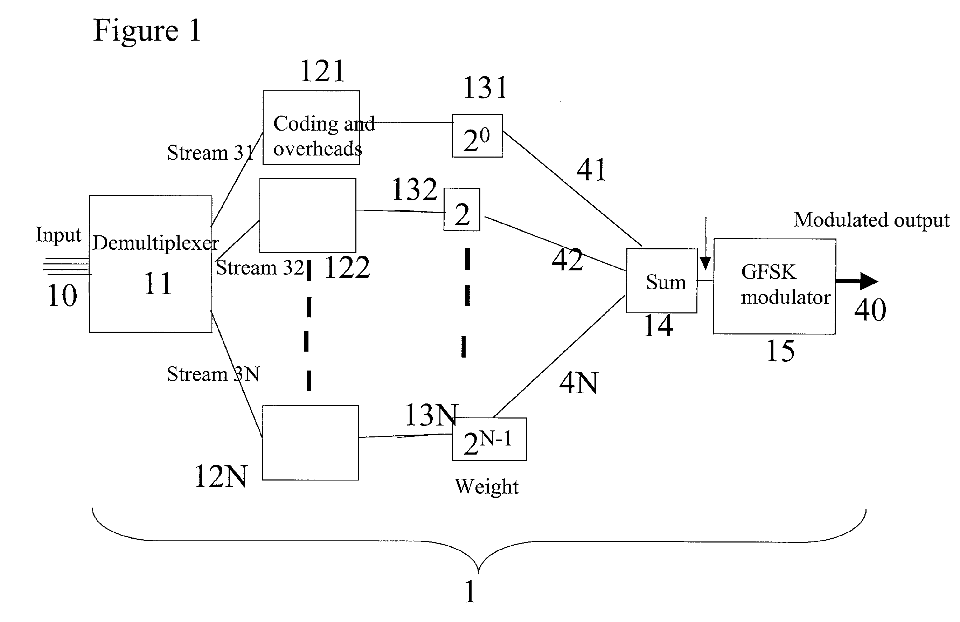

An embodiment of the invention will now be described, by way of example, with reference to the drawings, in which
Figure 1 is a schematic representation of a transmitter,
Figure 2 is a schematic representation of a receiver,
Figures 3 to 7 are diagrams illustrating how a signal is processed according to the invention.

In this embodiment the coding is simple (non-Gaussian) frequency shift keying, using simple binary coding for ease of illustration. However, the principles can easily be extended to systems using phase or amplitude keying, or a combination of keying. Gray coding may be used instead of simple binary.

A plurality of individual signals 31, 32.....3N are delivered to a transmitter 1. These individual signals may have been independantly generated, and may have different priorities allocated to them according to a predetermined criterion such as the identity of the termination point from or to which they are being transmitted. This allows users paying for a premium service, or data overhead essential to the integrity of the network, to be given the most robust channels.

Alternatively, two or more of the signals 31, 32, .....3N may have a common source, being parts of a single signal requiring more bandwidth than a single channel of the system can handle. Two or more such data streams may be allocated different priorities. For example, text or sound may be allocated a higher priority than video information, and error correction data may be allocated a lower priority than the data it is to correct. The data can then be coded using a subset of a multi-bit "word". For example, sound may be allocated one bit, video another two bits, and error correction a fourth bit.

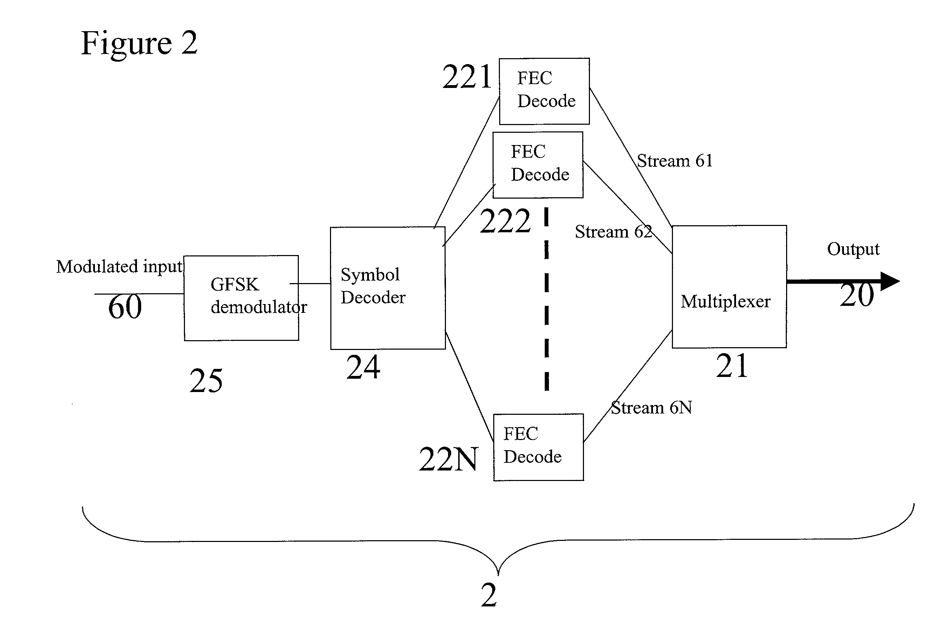

In the transmitter 1 the input bits are allocated to a plurality of streams 31, 32, ....3N by a de-multiplexer 11. Each stream is then fed to a coder 121, 122, ... 12N, which adds overhead necessary to aid synchronisation at the receiver 2 (Figure 2) and also may add forward error-correction coding and scrambling. Each bit stream is then passed through a weighting process 131, 132, .... 13N, the magnitude of each bit stream being weighted by a different power of two to generate individual weighted bit streams 41, 42, ....4N.

The choice of which weighting to apply to each bit stream may be made according to any desired prioritisation criteria, for example, greater weightings may be applied to parts of a transmission having greater importance (sound being prioritised over vision, with error checking given least priority). When the input 10 is a multiplex of inputs from different customers paying for different service levels, those having the best service level guarantee can be given the largest weightings, and therefore the most robust transmission. Different levels of error checking can be applied to each traffic channel according to the weighting of that traffic channel. Some channels may carry error checking data for other channels.

The weighted bit streams are next added together in an addition unit 14. Because of the weightings, the values of each individual bit in the resulting symbols can be uniquely identified. The output of the addition unit 14 is modulated with a GFSK modulator 15 using a Gaussian or other type of low-pass filter with bandwidth of typically 0.2 to 0.5, and transmitted to the receiver 2.

At the receiver 2 the input 60 is demodulated using a GFSK demodulator 25 and then split by a symbol decoder 24. The symbol decoder 24 converts the multi-bit symbols into a string of binary code, and then separates the code into copies 61, 62....., 6N of the original streams 31, 32, 33, .....3N, each of which is then separately decoded in a FEC (forward error correction) decoder 221, 222, ....22N and de-scrambled if required. The outputs from the FEC decoders are then combined in a multiplexer 21 to generate an output 20 reconstructing the original input 10 to the transmitter 1.

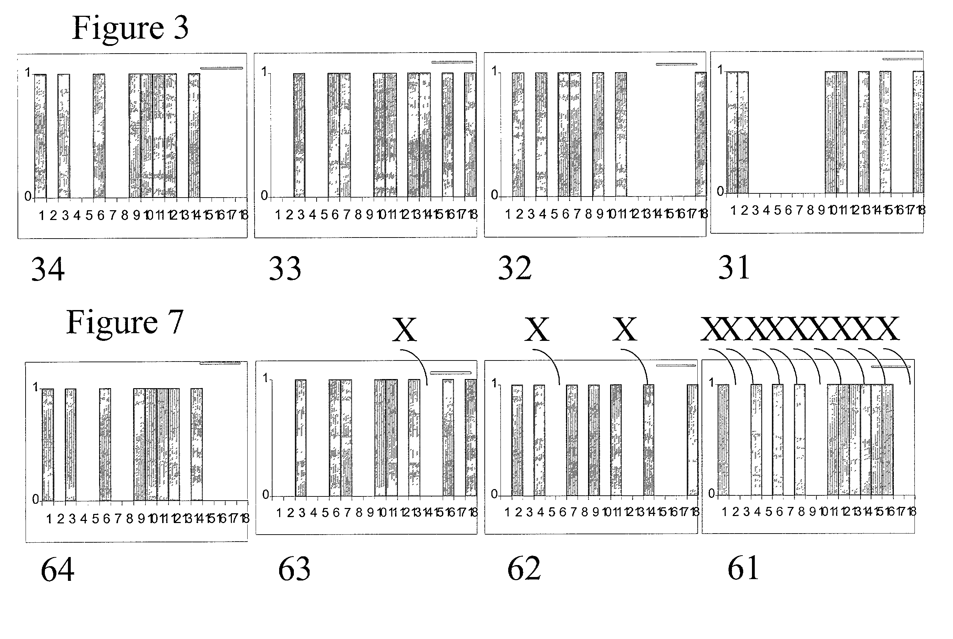

Figures 3 to 7 show this process applied, as an example, to the four square wave binary streams 31, 32, 33, 34 shown in Figure 3. It will be understood that the following is a simplified system to demonstrate the principle behind the invention. Neither the number of streams nor the shape of the waveforms nor the coding system used is intended to be limitative, and in practice, as has already been explained, a Gaussian wave form would be preferable.

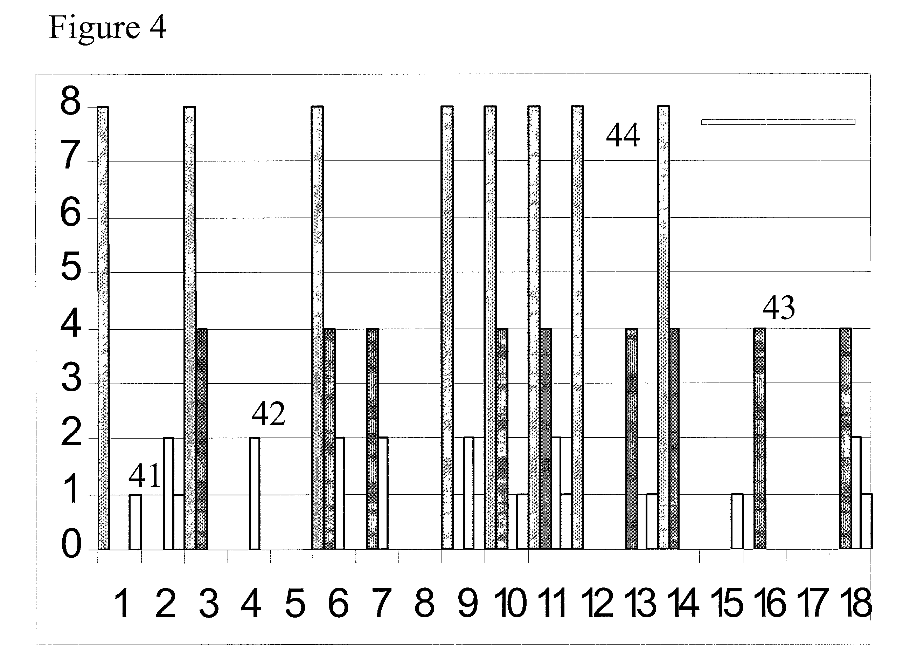

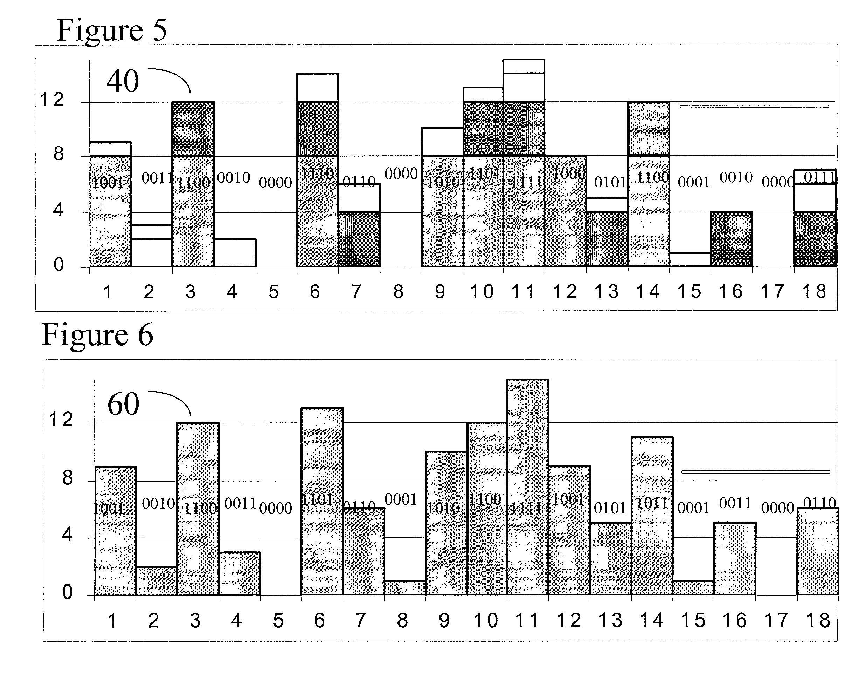

The weighting process 131, 132, 133, 134 weights the original binary streams 312, 32, 33, 34 by factors of 2°, 2¹, 2², and 2³ . The four individual bit streams 31, 32, 33, 34 are therefore each weighted by a different power of two to generate weighted signals 41, 42, 43, 44, as shown in Figure 4, and these can be combined by simple addition to generate a single sixteen-level output signal 40 at the output of the addition unit 14 (Figure 5). The sixteen available levels in this signal can each be represented by a four-bit word, also shown in Figure 5, each of the four bits representing the respective bit from one of the original signals 31, 32, 33, 34. The first (most significant) bit represents the signal 34 having the greatest weighting of 2³ = 8 and the last (least significant) bit represents the signal 31 having the least weighting of 2° = 1.

It will be noted that the general shape of the output signal 40 resembles that of the signal 44 having the greatest weighting, but deviates from that signal according to the magnitudes of the other signals. Thus each signal 41, 42, 43 can be considered as a modulation on the signal 42, 43, 44 having the next greatest weighting.

Although it is envisaged that the number of modulation levels in the transmitted signal should be equal to the total number of modulation levels in each stream, a smaller number may be used if some data loss can be tolerated. For example, in the present embodiment, if only fifteen levels (0000 to 1110) were available, a 1111 would be coded as 1110. Thus if the other streams 34, 33, 32 each code a "1", the bit coded on the lowest priority stream 31 would be rendered as a "0" regardless of the input, and the data from that bit would be lost.

The presence of noise tends to corrupt a signal so that it does not fall precisely on one of the predetermined levels. As has been discussed already, this phenomenon dictates the minimum difference between levels, or modulation depth. However, it can be seen that the different weightings cause the individual bit streams 41, 42, 43, 44 to have different modulation depths, and therefore different tolerances to noise. Figure 6 shows a signal 60, which is the signal 40 transmitted by the transmitter 1 after corruption by a noisy environment. For the purposes of illustration the noise has a peak-to-peak magnitude slightly larger than that of the modulation depth of the second-least weighted signal 42. Figure 7 shows the resulting bit streams 61, 62, 63, 64 recovered from the corrupted signal, each bit having been normalised to the nearest modulation levels. Errored digits are indicated in Figure 6 by an "X". It will be seen by comparison with Figure 3 it will be seen that the bit stream 31/61 which had the least weighting is corrupted the most (BER of 50%: essentially completely randomised), and the bit stream 34/64 which had the most weighting is least corrupted (no errors at all). The other two bit streams 62, 63 have errors at rates intermediate between these extremes. It should be noted that an untypically low signal-to-noise ratio has been used for this illustration, resulting in untypically high bit - error rates. However, the principle that the BER is reduced as the modulation depth increases is clearly illustrated.

The stream 3N carrying the largest weighting therefore carries the highest modulation index. This means that it can be resolved by receivers operating at lower carrier:noise ratios than is required for other streams 31, 32,..... In like manner, a receiver would demodulate the second-heaviest weighted stream in less noise than the heaviest but in more noise than the others. In this way, in the presence of increasing noise at the receiver, caused perhaps by decreasing receiver antenna size or by weather effects, the multiple level GFSK scheme allows "graceful" failure of the communications link. The scheme also allows different quality-of-service (QoS) levels to be carried on the different streams, the highest QoS corresponding to the highest weighting and hence the highest modulation index. As a further application, the amount of error correction overhead to be applied to each of several streams may be adjusted according to the modulation depth (weighting) applied to each stream, to provide equivalent QoS on each.

It should be recognised that the digits in the multiplex may be converted to analogue values for onweard transmission in the multi-level system using any conversion process at all. The simple binary system is used in the described embodiment for illustrative purposes, but other coding systems may improve the reliability of the least heavily weighted streams. For example, the simple binary code may be read as "Gray code" the result being converted to an analogue value. In the "Gray code" system any number 2ⁿ + M is represented by an (n + 1) digit binary number of the form 1ABC...N, where N....CBA is the number 2ⁿ - (M+1) represented in the same form. In this system any pair of adjacent numbers in the series are represented by codes differing by one digit only: thus:

| BINARY | DECIMAL | GRAY |
|---|---|---|
| 0000 | 0 | 0000 |
| 0001 | 1 | 0001 |
| 0010 | 2 | 0011 |
| 0011 | 3 | 0010 |
| 0100 | 4 | 0110 |
| 0101 | 5 | 0111 |
| 0110 | 6 | 0101 |
| 0111 | 7 | 0100 |
| 1000 | 8 | 1100 |
| 1001 | 9 | 1101 |
| 1010 | 10 | 1111 |
| 1011 | 11 | 1110 |
| 1100 | 12 | 1010 |
| 1101 | 13 | 1011 |
| 1110 | 14 | 1001 |
| 1111 | 15 | 1000. |

Thus in Gray code the value 0011 represents the value "3", whilst in normal binary it represents "4". Using simple binary the least significant digit changes between each modulation level and the next, so an error of one modulation level will inevitably result in an error in the least significant digit. Using Gray code the error rate would be halved, as an error of one level would only cause an error in the least significant digit on 50 % of occurrences. It can be seen that this reduction in error rate would also apply to all other levels (except the most significant digit, which is always the same in both systems). Because of this, the use of Gray code would reduce the error rate in each data stream iof the multiplex.

## Claims

1. A method of transmitting a signal using three or more modulation levels, in which two or more data streams are each modulated using a lesser number of modulation levels and combined to generate the transmitted signal

2. A method for processing signals received from a transmitter, the method comprising receiving a signal comprising four or more modulation levels, and separating the signal into a plurality of individual data streams each having a lesser number of modulation levels than the incoming signal.

3. A method according to claim 1 or claim 2, wherein a first data stream is allocated to modulation levels separated by a first modulation shift and a second data stream is allocated to modulation levels separated by a second modulation shift, the second modulation shift being smaller than the first modulation shift.

4. A method according to claim 3, wherein a plurality of data streams are each weighted by a value equal to a different integer power of the number of modulation levels in each data stream

5. A method according to claim 3 or 4, wherein the second data stream is given a greater degree of error correction than the first data stream.

6. A method according to claim 3 or 4, wherein the second data stream is allocated a lower priority status than the first data stream.

7. A method according to claim 6, wherein the individual signals are independently generated, different priorities being allocated to them according to a predetermined criterion.

8. A method according to claim 7, wherein the predetermined criterion is the identity of the termination points from or to which the respective signals are transmitted.

9. A method according to claim 8, wherein the termination points to which the data streams are allocated for transmission are selected according to reception conditions at the respective termination points.

10. A method according to claim 6, wherein a high bit-rate signal is divided into two or more data streams, each stream being allocated a different priority.

11. A method according to claim 10, wherein one or more of the streams carry audio information.

12. A method according to claim 10 or 11, wherein one or more of the streams carry video information.

13. A method according to claim 10, 11 or 12, wherein one or more of the streams carry text information.

14. A method according to claim 8, 10, 11, 12 or 13, wherein one or more of the data streams carry error correction data for one or more other data streams.

15. A transmitter comprising means for receiving two or more data streams, means for modulating each data stream using a number of modulation levels, means for combining the streams to form a greater number of modulation levels and means for transmitting the combined streams as a single signal using three or more modulation levels.

16. A transmitter according to claim 15, comprising means for allocating a first data stream to modulation levels separated by a first modulation shift and for allocating a second data stream to modulation levels separated by a second modulation shift, the second modulation shift being smaller than the first modulation shift.

17. A transmitter according to claim 16, comprising means for weighting each of a plurality of data streams by a value equal to a different integer power of the number of modulation levels in each data stream

18. A transmitter according to claim 16 or 17, comprising means for applying error correction processing to at least the second data stream, and wherein the second data stream is given a greater degree of error correction than the first data stream.

19. A transmitter according to claim 16 or 17, comprising means for identifying a priority status applied to each data stream and allocating a modulation depth accordingly.

20. A transmitter according to claim 19, wherein the individual signals are independantly generated, wherein the means for identifying the priority status of a data stream comprises means for identifying the termination points from or to which the respective signals are transmitted.

21. A transmitter according to claim 19, comprising means for dividing a high bit-rate signal into two or more data streams, and means for allocating each stream a different priority.

22. A transmitter according to 21, comprising means for generating error correction data for one or more data streams, and means for carrying the error correction data in a further data stream.

23. A receiver comprising means for receiving a signal comprising three or more modulation levels from a transmitter, and signal separation means for separating the signal into a plurality of individual data streams, each having a lesser number of modulation levels than the incoming signal.

24. A receiver according to claim 23, comprising means for distinguishing a first data stream having modulation levels separated by a first modulation shift from a second data stream having modulation levels separated by a second modulation shift, the second modulation shift being smaller than the first modulation shift,

25. A receiver according to claim 24, wherein a plurality of data streams are each weighted by a value equal to a different integer power of the number of modulation levels in each data stream

26. A receiver according to claim 23, 24 or 25, comprising means for combining two or more of the plurality of individual data sttreams into a single high bit-rate signal.

27. A receiver according to claim 26, wherein one or more of the data streams carry error correction data for one or more other data streams.

28. A receiver according to any of claims 23 to 27, having means for selecting, from the plurality of data streams in the signal received from the transmitter, a smaller number of the said streams, and means for decoding only the selected stream or streams.

29. A transceiver device comprising a transmitter according to any of claims 15 to 22 and a receiver according to any of claims 23 to 28, arranged to co-operate with a similar transceiver device to form a two-way link
